# EUROPÄISCHE PATENTANMELDUNG

(11) **EP 4 311 090 A1**
(43) Veröffentlichungstag der Anmeldung: **24.01.2024**
(21) Anmeldenummer: 22186422.6
(22) Anmeldetag: 22.07.2022
(51) Int. Cl.: H02K 15/085

(54) **ANORDNEN EINER DRAHTWICKLUNG IN EINEM MAGNETISIERBAREN FLUSSLEITKÖRPER EINES STÄNDERS EINER ALS INNENLÄUFER AUSGEBILDETEN ROTIERENDEN ELEKTRISCHEN MASCHINE**

(71) Anmelder: Siemens Aktiengesellschaft, 80333 München (DE)
(72) Erfinder: Helstýn, Jaroslav, 70800 Ostrava (CZ); Josiek, Vladislav, 73601 Havírov (CZ); Kirchner, Klaus, 97645 Ostheim (DE)
(74) Vertreter: Siemens Patent Attorneys

(57) **Zusammenfassung**

Die Erfindung betrifft eine Wickelvorrichtung (60) zum Anordnen einer Drahtwicklung (12) in einem magnetisierbaren Flussleitkörper (10) eines Ständers einer als Innenläufer ausgebildeten rotierenden elektrischen Maschine, wobei der magnetisierbare Flussleitkörper (10) eine Aufnahmeöffnung (14) zum Aufnehmen eines drehbar gelagerten Läufers der rotierenden elektrischen Maschine und öffnungsseitig offene Längsnuten (16) zum Anordnen von Windungen der Drahtwicklung (12) aus wenigstens einem Wicklungsdraht (18) aufweist, mit:
- einer zumindest teilweise in der Aufnahmeöffnung (14) anordbaren Drahteinlegevorrichtung (20) und
- einer Unterstützungseinheit (22), die das Einlegen des Wicklungsdrahtes (18) unterstützt und die wenigstens ein Führungselement aufweist, welches dazu ausgebildet ist, den Wicklungsdraht (18) in einer vorbestimmten Längsnut (16) des magnetisierbaren Flussleitkörpers (10) anzuordnen.

## Beschreibung

Die Erfindung betrifft eine Wickelvorrichtung zum Anordnen einer Drahtwicklung in einem magnetisierbaren Flussleitkörper eines Ständers einer als Innenläufer ausgebildeten rotierenden elektrischen Maschine, wobei der magnetisierbare Flussleitkörper eine Aufnahmeöffnung zum Aufnehmen eines drehbar gelagerten Läufers der rotierenden elektrischen Maschine und öffnungsseitig offene Längsnuten zum Anordnen der Drahtwicklung aufweist, wobei die Drahtwicklung Windungen aus wenigstens einem Wicklungsdraht aufweist. Ferner betrifft die Erfindung ein Verfahren zum Anordnen einer Drahtwicklung in einem magnetisierbaren Flussleitkörper eines Ständers einer als Innenläufer ausgebildeten rotierenden elektrischen Maschine, wobei der magnetisierbare Flussleitkörper eine Aufnahmeöffnung zum Aufnehmen eines drehbar gelagerten Läufers der rotierenden elektrischen Maschine und öffnungsseitig offene Längsnuten zum Anordnen der Drahtwicklung aufweist, wobei die Drahtwicklung Windungen aus wenigstens einem Wicklungsdraht aufweist.

Gattungsgemäße elektrische Maschinen, Ständer hierfür sowie Verfahren und Wickelvorrichtungen hierfür sind dem Grunde nach im Stand der Technik bekannt, also dass es eines gesonderten druckschriftlichen Nachweises nicht bedarf. Bei einer rotierenden elektrischen Maschine ist dem Grunde nach ein Ständer als Stator vorgesehen, der in der Regel eine im Wesentlichen kreisförmige Öffnung zur Aufnahme eines als Rotor ausgebildeten Läufers bereitstellt. In der Öffnung ist der Läufer drehbar gelagert angeordnet, wobei zwischen dem Läufer und dem Ständer ein Luftspalt ausgebildet ist.

Eine rotierende elektrische Maschine ist eine Vorrichtung, die elektrische Energie in mechanische Energie, insbesondere Bewegungsenergie (Motorbetrieb) und/oder mechanische Energie in eine elektrische Energie (Generatorbetrieb) umformt. Bei der Bewegung handelt es sich in der Regel um eine Drehbewegung, die vom Läufer ausgeführt wird. Der Ständer ist im Unterschied zum Läufer drehfest angeordnet, das heißt, bei der Drehbewegung handelt es sich um eine Drehbewegung des Läufers gegenüber dem Ständer. Der Ständer und der Läufer sind mittels eines magnetischen Flusses verkettet, wodurch im Motorbetrieb die Kraftwirkung, nämlich das Drehmoment erzeugt wird, die den Läufer gegenüber dem Ständer drehend antreibt, und im Generatorbetrieb dem Läufer zugeführte mechanische Energie in Form einer Rotation in elektrische Energie umwandelt. Zu diesem Zweck weist zumindest der Ständer und gegebenenfalls auch der Läufer eine von einem elektrischen Strom durchflossene Wicklung auf. Im Ständer oder im Läufer kann die Wicklung auch durch einen Permanentmagneten gebildet oder ergänzt sein.

Rotierende elektrische Maschinen der gattungsgemäßen Art sind beispielsweise Gleichspannungsmaschinen, beispielsweise Nebenschluss- oder Reihenschlussmaschinen, die im bestimmungsgemäßen Betrieb mit einer elektrischen Gleichspannung beziehungsweise einem elektrischen Gleichstrom beaufschlagt werden, Wechselspannungsmaschinen, die mit einer elektrischen Wechselspannung beziehungsweise einem elektrischen Wechselstrom beaufschlagt werden, insbesondere Drehfeldmaschinen, die an ein mehrphasiges, insbesondere dreiphasiges elektrisches Wechselspannungsnetz angeschlossen sind, wie beispielsweise Asynchronmaschinen, Synchronmaschinen, Synchronmaschinen mit Dämpferkäfig, oder dergleichen.

Zumindest der Ständer weist in der Regel einen magnetisierbaren Flussleitkörper auf. Der magnetisierbare Flussleitkörper dient dazu, im bestimmungsgemäßen Betrieb einen magnetischen Fluss zumindest teilweise zu führen, um die gewünschte Maschinenfunktion zu erreichen oder zumindest zu unterstützen. Der magnetisierbare Flussleitkörper kann zum Beispiel ein Blechpaket aufweisen, das seinerseits aus einzelnen, untereinander elektrisch isolierten ferromagnetischen beziehungsweise magnetisierbaren Blechen besteht. Die Bleche können je nach Verwendungszweck auch als Dynamoblech, Motorenblech, Transformatorenblech oder dergleichen bezeichnet sein. Derartige Bleche unterliegen der Normung, beispielsweise EN10106, EN10107 oder dergleichen. In das Blechpaket eingelassen sind Nuten, die in der Regel als Längsnuten ausgebildet sind und die im Wesentlichen parallel zu einer Längsachse beziehungsweise Drehachse des Läufers oder auch geschrägt hierzu ausgebildet sein können. In den Längsnuten sind stromführende Windungen der Wicklung, insbesondere der Ständerwicklung, die einen magnetischen Fluss bereitstellen, angeordnet. Die Wicklung des Ständers ist somit häufig in das Blechpaket integriert ausgeführt.

Der Ständer nimmt die Reaktion in Bezug auf ein Läuferdrehmoment auf und stützt sich gegen eine Auflage ab, um drehfest angeordnet zu sein. Die Abstützung kann durch ein Fundament oder dergleichen Auflage gebildet sein. Das Blechpaket bezeichnet also einen aus ferromagnetischen Werkstoffen hergestellten und damit magnetisierbaren, schichtweise aufgebauten Körper, und zwar den magnetisierbaren Flussleitkörper. Die Aufgabe des magnetisierbaren Flussleitkörpers besteht darin, in Verbindung mit der stromdurchflossenen Wicklung den magnetischen Fluss zu bündeln. Der magnetisierbare Flussleitkörper kann jedoch auch einen Körper aus einem magnetisierbaren Ferritmaterial oder dergleichen aufweisen.

Das Herstellen einer Ständerwicklung für die rotierende elektrische Maschine umfasst in der Regel, dass die Wicklung, das heißt, Windungen der Wicklung beziehungsweise der Ständerwicklung, in dafür vorgesehene in der Regel als Längsnuten ausgebildete Durchgangsöffnungen angeordnet werden. Bei rotierenden elektrischen Maschinen im Bereich der kleinen und der mittleren Leistung kommen häufig Wicklungen zum Einsatz, die aus einem oder mehreren Wicklungsdrähten, insbesondere Runddrähten, gebildet sind, die - im Unterschied zu Stabwicklungen - in die entsprechenden Längsnuten eingezogen werden können. So offenbart zum Beispiel die WO 2020/058048 A1 das Einziehen von Wicklungen in ein Statorblechpaket.

Es ist beispielsweise bekannt, Windungen der Wicklung, insbesondere wenn sie aus einem einzigen elektrischen Leiter in Form eines Wicklungsdrahtes, insbesondere Runddrahtes oder dergleichen, hergestellt werden, auf eine Schablone zu wickeln und im Anschluss daran die Wicklung beziehungsweise die Windungen in die Längsnuten einzubringen. Im magnetisierbaren Flussleitkörper beziehungsweise im Ständer angeordneten Zustand weist die Wicklung an axialen Enden des Ständers beziehungsweise des magnetisierbaren Flussleitkörpers jeweils einen Wicklungskopf auf. Bei dem vorgenannten Verfahren sind ein großer Anteil der Windungen sowie auch Abschnitte, die einem der beiden Wicklungsköpfe zugeordnet sind, in der Regel unkontrolliert außerhalb der Schablone. Beim Einziehen der Windungen in die jeweiligen Längsnuten kann eine vorgegebene Anordnung der einzelnen Windungen nicht gewährleistet werden. Es können folglich in den Längsnuten Überkreuzungen einzelner Windungen auftreten, wodurch sich ein Verlust an Füllgrad in den jeweiligen Längsnuten ergeben kann. Dadurch können zum Beispiel in Bezug auf eine jeweilige Windung abweichende elektrische Spannungen in Bezug auf benachbart angeordnete Windungen im bestimmungsgemäßen Betrieb auftreten. Darüber hinaus besteht die Gefahr, dass eine Bindungsisolierung geschwächt oder beschädigt wird.

Die WO 2020/058048 A1 befasst sich dagegen damit, eine sogenannte gelegte Wicklung mit einer definierten Anordnung der einzelnen Windungen in die Längsnuten einziehen zu können. Hierzu wird unter anderem ein spezifisches Wickelwerkzeug mit Werkzeugnuten eingesetzt, die auf einem äußeren Umfang eines Werkzeugkerns ausgebildet sind und in denen die einzelnen Windungen der Wicklung angeordnet werden.

Auch wenn sich der Stand der Technik dem Grunde nach bewährt hat, so verbleiben dennoch Nachteile. Einerseits erweisen sich die Verfahren des Stands der Technik als aufwendig und teuer, wohingegen andererseits insbesondere beim Einsatz des die Schablone nutzenden Verfahrens das Problem besteht, dass eine Windungslänge einer einzelnen Windung mit einem Übermaß ausgelegt werden muss, damit im folgenden Einziehvorgang die zuerst eingezogene Windung es aufgrund der Windungslänge erlaubt, die zuletzt eingezogene Windung vollständig in die Längsnut einziehen zu können. Hierdurch wird jedoch ein Übermaß in Bezug auf eine Windungslänge der einzelnen Windungen benötigt, welches nicht nur zu elektrischen Verlusten führen kann, sondern auch eine entsprechend große Ausbildung eines jeweiligen der Wicklungsköpfe zur Folge haben kann. Dies kann sich darüber hinaus auch nachteilig für die Stabilität der Wicklungsköpfe im bestimmungsgemäßen Betrieb auswirken, weil die einzelnen Windungen jeweiligen Kräften ausgesetzt sind.

Durch die steigenden Anforderungen an die Effizienz von elektrischen Maschinen und den damit verbundenen Änderungen in der elektromagnetischen Auslegung, wie zum Beispiel eine Nutfüllung, eine Breite einer Nutöffnung und/oder dergleichen, kommen weit verbreitete Wickel-Einzieh-Verfahren an technologische Grenzen. In der Vergangenheit wurde die Herstellung von elektrischen Maschinen immer mehr auf zeit- und kostenintensive manuelle Bewicklung umgestellt. Darüber hinaus kommen bisher maschinelle Wickelverfahren zum Einsatz wie zum Beispiel eine Nadelwicklung für kleine und mittlere Maschinengrößen oder eine Direktbewicklung mittels Robotern für große elektrische Maschinen. Diese Wickelverfahren haben spezifische Nachteile wie eine große Anlageninvestition, eine komplexe Steuerung durch die Überlagerung von mehreren Bewegungsrichtungen, wodurch eine Reduzierung der Wickelgeschwindigkeit die Folge sein kann, sowie ein Erfordernis von Zusatzteilen, beispielsweise Endscheiben zur Ablage und Formung von Wicklungsköpfen, und/oder dergleichen.

Der Erfindung liegt die Aufgabe zugrunde, ein gattungsgemäßes Verfahren dahingehend weiterzubilden, dass das Herstellen der Wicklung verbessert werden kann und eine Wickelvorrichtung hierfür anzugeben.

Als Lösung werden mit der Erfindung eine Vorrichtung und ein Verfahren gemäß den unabhängigen Ansprüchen vorgeschlagen.

Vorteilhafte Weiterbildungen ergeben sich durch Merkmale der abhängigen Ansprüche.

In Bezug auf eine gattungsgemäße Vorrichtung wird mit der Erfindung insbesondere eine Wickelvorrichtung zum Anordnen einer Drahtwicklung in einem magnetisierbaren Flussleitkörper eines Ständers einer als Innenläufer ausgebildeten rotierenden elektrischen Maschine vorgeschlagen, wobei der magnetisierbare Flussleitkörper eine Aufnahmeöffnung zum Aufnehmen eines drehbar gelagerten Läufers der rotierenden elektrischen Maschine und öffnungsseitig offene Längsnuten zum Anordnen der Drahtwicklung, wobei die Drahtwicklung Windungen aus wenigstens einem Wicklungsdraht aufweist, mit einer zumindest teilweise in der Aufnahmeöffnung anordbaren Drahteinlegevorrichtung und einer Unterstützungseinheit, die das Einlegen des Wicklungsdrahtes unterstützt und die wenigstens ein Führungselement aufweist, welches dazu ausgebildet ist, den Wicklungsdraht in einer vorbestimmten Längsnut des magnetisierbaren Flussleitkörpers anzuordnen.

In Bezug auf ein gattungsgemäßes Verfahren wird mit der Erfindung insbesondere ein Verfahren zum Anordnen einer Drahtwicklung in einem magnetisierbaren Flussleitkörper eines Ständers einer als Innenläufer ausgebildeten rotierenden elektrischen Maschine vorgeschlagen, wobei der magnetisierbare Flussleitkörper eine Aufnahmeöffnung zum Aufnehmen eines drehbar gelagerten Läufers der rotierenden elektrischen Maschine und öffnungsseitig offene Längsnuten zum Anordnen der Drahtwicklung aufweist, wobei die Drahtwicklung Windungen aus wenigstens einem Wicklungsdraht aufweist, wobei eine Drahteinlegevorrichtung zumindest teilweise in der Aufnahmeöffnung angeordnet wird und das Einlegen des Wicklungsdrahtes mittels einer Unterstützungseinheit unterstützt wird, die wenigstens ein Führungselement aufweist, wobei das Führungselement den Wicklungsdraht in einer vorbestimmten Längsnut des magnetisierbaren Flussleitkörpers anordnet.

Die Erfindung basiert unter anderem auf dem Gedanken, dass das automatisierte Wickeln zumindest teilweise dadurch verbessert werden kann, dass neben einer geeigneten Drahteinlegevorrichtung, die vorzugsweise zumindest teilweise in der Aufnahmeöffnung anordbar ist, eine Unterstützungseinheit vorgesehen ist, die beispielsweise durch den Einsatz von zum Beispiel Drahtleitkörpern, federvorgespannten Komponenten, zusätzlichen Antriebseinheiten, und/oder dergleichen das Einführen des Wicklungsdrahts der Drahtwicklung in die Längsnuten des magnetisierbaren Flussleitkörpers verbessern kann. Dadurch kann nicht nur der Aufwand für die, insbesondere automatisierte, Herstellung der Ständerwicklung beziehungsweise Wicklung des Ständers reduziert werden, sondern es kann auch die Qualität der Wicklung verbessert werden. Mittels der erfindungsgemäßen Wickelvorrichtung beziehungsweise der erfindungsgemäßen Verfahrensführung können Auswirkungen auf die jeweiligen in den Nuten angeordneten Windungen der Wicklung reduziert werden. Insbesondere kann die Genauigkeit einer Positionierung einer jeweiligen Windung in einer Nut deutlich verbessert werden. Dadurch kann unter anderem auch eine Nutfüllung verbessert werden, sodass ein Füllfaktor vergrößert werden kann. Zugleich kann eine einfache Anpassung an unterschiedliche Nutbreiten in Umfangsrichtung erreicht werden, sodass die Wickelvorrichtung sowie auch das Verfahren der Erfindung auf einfache Weise an unterschiedlichste Ständer beziehungsweise magnetisierbare Flussleitkörper angepasst werden kann. Dadurch können auch die Nachteile in Bezug auf große Anlageninvestitionen sowie das Erfordernis in Bezug auf Zusatzteile reduziert werden.

Die Drahteinlegevorrichtung kann dazu ausgebildet sein, vorzugsweise konzentrisch zu einer Längsachse des magnetisierbaren Flussleitkörpers angeordnet zu werden. Die Drahteinlegevorrichtung ist vorzugsweise derart ausgebildet und angetrieben, dass sie eine jeweilige Spule der Wicklung, die mehrere Windungen aus dem wenigstens einen Wicklungsdraht aufweisen kann, in ein jeweils zugeordnetes Nutpaar von Längsnuten des magnetisierbaren Flussleitkörpers anzuordnen vermag. Die Drahteinlegevorrichtung ist ferner vorzugsweise dazu ausgebildet, mehrere Spulen in den Längsnuten aus einem einzigen Wicklungsdraht anzuordnen. Es kann vorgesehen sein, dass die Drahteinlegevorrichtung zwei oder mehrere Wicklungsdrähte zeitgleich, insbesondere parallel, für das Anordnen in den Längsnuten bereitstellt. Ferner kann vorgesehen sein, dass die Drahteinlegevorrichtung ausgebildet ist, mehrere elektrisch voneinander getrennte Teilwicklungen der Windung in den Längsnuten anzuordnen. Dies ist beispielsweise vorteilhaft, wenn es sich bei der rotierenden elektrischen Maschine um eine elektrische Maschine für den Betrieb an einer mehrphasigen Wechselspannung handelt. Die Drahteinlegevorrichtung kann dazu ausgebildet sein, mehrere Windungen des Wicklungsdrahts in die gleiche Längsnut anordnen zu können.

Die Drahteinlegevorrichtung wirkt vorzugsweise mit der Unterstützungseinheit zusammen, die das Einlegen des Wicklungsdrahts unterstützt. Zu diesem Zweck weist die Unterstützungseinheit wenigstens ein Führungselement auf, welches dazu ausgebildet ist, den Wicklungsdraht durch gezieltes Führen in einer vorbestimmten Längsnut des magnetisierbaren Flussleitkörpers anzuordnen. Es kann dadurch erreicht werden, dass die Drahteinlegevorrichtung den Wicklungsdraht am Führungselement anordnet, wobei das Führungselement aufgrund einer Zugwirkung oder einer Kraftwirkung wie der Gewichtskraft auf den Draht einwirkt, um das Anordnen des Wicklungsdrahts in der jeweiligen Längsnut zu unterstützen beziehungsweise zu ermöglichen oder zu fördern. Die Unterstützungseinheit kann hierzu ein Körperelement aufweisen, welches beispielsweise Schrägen, Stifte, Kombinationen hiervon oder dergleichen bereitstellt, die aufgrund ihrer Ausrichtung und Position dazu dienen können, dass der Wicklungsdraht in die jeweilige Längsnut hineingleiten kann. Die Unterstützungseinheit kann zu diesem Zweck innerhalb der Aufnahmeöffnung angeordnet sein. Sie braucht sich jedoch nicht über die gesamte axiale Erstreckung des magnetisierbaren Flussleitkörpers zu erstrecken. Vorzugsweise ist jedoch vorgesehen, dass die Unterstützungseinheit zumindest teilweise an einem oder beiden axialen Enden des magnetisierbaren Flussleitkörpers aus der Aufnahmeöffnung herausragt. Die herausragenden Abschnitte der Unterstützungseinheit können in geeigneter Weise ausgebildet sein, um das Ausbilden eines Wicklungskopfs zu unterstützen oder zu ermöglichen.

Die Unterstützungseinheit kann lösbar an einer inneren Oberfläche der Aufnahmeöffnung des magnetisierbaren Flussleitkörpers angeordnet sein. Vorzugsweise ist sie passend zu Rändern von jeweiligen Längsnuten in Umfangsrichtung ausgerichtet angeordnet. Die Unterstützungseinheit kann einteilig oder mehrteilig ausgebildet sein. Es kann aber auch vorgesehen sein, dass die Unterstützungseinheit vollständig außerhalb der Aufnahmeöffnung des magnetisierbaren Flussleitkörpers angeordnet ist, beispielsweise im Bereich von an axialen Enden des magnetisierbaren Flussleitkörpers ausgebildeten Körperstirnseiten. Auch hier können entsprechende Führungselemente vorgesehen sein. Die Führungselemente können hinsichtlich der Geometrie des magnetisierbaren Flussleitkörpers und der durch ihn bereitgestellten Längsnuten angepasst ausgebildet sein und beispielsweise entsprechende Schrägen bereitstellen, die das Anordnen des Wicklungsdrahts in den jeweiligen Längsnuten unterstützen beziehungsweise ermöglichen.

Nachdem in einer Nut beziehungsweise einem Nutpaar eine vorgegebene Anzahl von Windungen des Wicklungsdrahts angeordnet ist, kann vorgesehen sein, dass der magnetisierbare Flussleitkörper gegenüber der Wickelvorrichtung verdreht wird, um eine weitere Längsnut beziehungsweise ein weiteres Paar aus Längsnuten entsprechend bewickeln zu können. Dies kann sukzessive fortgeführt werden, bis die Wicklung vollständig hergestellt ist.

Durch den Einsatz der Unterstützungseinheit kann beispielsweise eine Bewegungsrichtung bei der Führung des Wicklungsdrahts reduziert oder verlagert werden. Die Nutzung der Unterstützungseinheit kann eine Reduzierung um eine Bewegungsrichtung beim eigentlichen Wickelprozess zur Folge haben. Dadurch kann eine Vereinfachung und eine kostensparende Variante der Wickelvorrichtung erreicht werden. Ferner kann der Wickelprozess als solcher durch Reduzierung von überlagerten Bewegungen beschleunigt werden. Darüber hinaus kann auf einfache Weise eine hohe Flexibilität in Bezug auf Varianten von Wicklungen und magnetisierbaren Flussleitkörpern erreicht werden. Ebenfalls vorteilhaft erweist sich ein geringer Programmieraufwand beim Anpassen der Wickelvorrichtung an einen zu umwickelnden magnetisierbaren Flussleitkörper. Ferner kann auch eine Reduzierung von Bauteilen am Produkt erreicht werden.

Die Drahteinlegevorrichtung kann für die Durchführung des Wickelprozesses beziehungsweise des Wicklungsvorgangs an den gegenüberliegenden Enden des magnetisierbaren Flussleitkörpers gehalten sein. Besonders vorteilhaft erweist es sich jedoch, wenn die Drahteinlegevorrichtung lediglich einendseitig gehalten ist. Bei dieser Ausgestaltung kann dann der magnetisierbaren Flussleitkörper auf einfache Weise in der Wickelvorrichtung bestückt werden beziehungsweise aus der Wickelvorrichtung entnommen werden, sobald die Wicklung fertiggestellt ist.

Die ein Nutpaar bildenden Längsnuten können in Umfangsrichtung über einen vorgegebenen Abstand voneinander ausgebildet sein. Die Unterstützungseinheit ist hierzu vorzugsweise angepasst. Ebenso kann die Drahteinlegevorrichtung entsprechend eingestellt werden, um eine Spule der Wicklung in das Nutpaar von Längsnuten anordnen zu können. Beispielsweise können Längsnuten eines Nutpaars um einen Drehwinkel in Umfangsrichtung von etwa 50° voneinander beabstandet sein. Je nach Bedarf kann dies jedoch auch variieren.

Die erfindungsgemäße Wickelvorrichtung ist folglich vielseitig einsetzbar, insbesondere für ein Ausbilden von unterschiedlichsten Wicklungen.

Es wird ferner vorgeschlagen, dass die Unterstützungseinheit einen in der Aufnahmeöffnung an einem Rand einer Längsnut anordbaren Drahtleitkörper aufweist, der eine Schrägfläche als Führungselement bereitstellt, die ausgebildet ist, einen durch die Drahteinlegevorrichtung auf der Schrägfläche angeordneten Draht einer Windung in die Längsnut hineingleiten zu lassen. Dadurch kann auf einfache Weise das Einführen des Wicklungsdrahts in die Längsnut realisiert werden, ohne dass weitere Eingriffe erforderlich wären. Die Schrägfläche kann beispielsweise entsprechend der gesamten axialen Länge der Längsnut ausgebildet sein. Vorzugweise endet die Schrägfläche an einem Rand der Öffnung der Längsnut. Dadurch kann der Wicklungsdraht ungehindert in die Längsnut durch die Öffnung hineingleiten. Das Hineingleiten kann beispielsweise durch eine Zugkraft auf den Wicklungsdraht unterstützt oder hervorgerufen werden. Es kann aber auch vorgesehen sein, dass der Wicklungsdraht aufgrund seiner Gewichtskraft in die Längsnut hineingleitet. In diesem Fall ist die Längsnut, in der der Wicklungsdraht angeordnet werden soll, vorzugsweise in einem unteren Bereich des magnetisierbaren Flussleitkörpers angeordnet.

Darüber hinaus wird vorgeschlagen, dass der Drahtleitkörper zwei gegenüberliegende Schrägflächen aufweist, die in Umfangsrichtung derart beabstandet sind, dass ein um den Drahtleitkörper herumgewundener Wicklungsdraht eine Windung der Wicklung ausbildet und mittels der gegenüberliegenden Schrägflächen in jeweilige der Längsnuten hineingleitet. Vorzugsweise sind die Schrägflächen hierzu derart ausgebildet, dass sie, wenn sie an den jeweiligen Nuträndern anliegen, entgegengesetzt zueinander geneigt sind, sodass eine Zugkraft auf den Wicklungsdraht ein Hineingleiten in die beiden Längsnuten ermöglicht. Der Drahtleitkörper bestimmt durch seine Positionierung gegenüber den ein Nutpaar bildenden Längsnuten somit die Anordnung der Windung in den Längsnuten. Sobald eine Spule aus mehreren Windungen auf diese Weise hergestellt worden ist, können der Drahtleitkörper und/oder der magnetisierbare Flussleitkörper gegenüber einander verdreht werden, sodass mit einem weiteren Nutpaar das Bewickeln fortgesetzt werden kann. Dann kann eine entsprechende weitere Spule nach dem vorgenannten Verfahren hergestellt werden.

Die gegenüberliegenden Schrägflächen des Drahtleitkörpers weisen zum Beispiel eine Schrägstellung auf, die in axialer Richtung im Wesentlichen konstant ausgebildet sein kann. Vorzugsweise ist der Abstand der gegenüberliegenden Schrägflächen im Bereich der Nutränder kleiner als radial entfernt hiervon in Richtung zur Längsachse. Dadurch kann eine entsprechende Führung des Wicklungsdrahts in die Längsnuten unterstützt werden.

Weiterhin wird vorgeschlagen, dass der Drahtleitkörper an seinen gegenüberliegenden axialen Enden jeweilige Endbereiche aufweist, die über an axialen Körperenden des magnetisierbaren Flussleitkörpers ausgebildete Körperstirnseiten hinausragen und eine jeweilige radiale Schräge ausbilden, die mit einem Ende an der Körperstirnseite anliegt. Das an der Körperstirnseite anliegende Ende ist somit radial außerhalb eines Bereichs der Aufnahmeöffnung. Hierdurch kann das Ausbilden eines Wicklungskopfs unterstützt werden, sodass ein separates Werkzeug zum Formen des Wicklungskopfs eingespart oder der Aufwand hierfür reduziert werden kann. Die Schräge kann ebenfalls durch eine Schrägfläche gebildet sein. Darüber hinaus kann die Schräge jedoch auch durch einen oder mehrere radial nach außen ragende Stifte gebildet sein, die von den jeweiligen axialen Enden des Drahtleitkörpers zumindest teilweise schräg radial nach außen zur Körperstirnseite gerichtet ausgebildet sind. Durch eine Gewichtskraft beziehungsweise einen Zug auf den Wicklungsdraht kann somit eine entsprechende Bewegung erreicht werden, sodass der Wicklungsdraht im Bereich der Körperstirnseite radial nach außen gezogen wird. Die Stifte sind vorzugsweise beweglich. Insbesondere können die Stifte als Leitvorrichtung für den wenigstens einen Wicklungsdraht dienen. Sie können mittels eine Stiftantriebseinheit angetrieben sein, um zum Beispiel eine Position und/oder eine Ausrichtung einstellen zu können. Besonders vorteilhaft können die Stifte nach Fertigstellung einer Spule der Wicklung zurückgezogen werden. Dadurch ist es möglich, dass das Wicklungsende freigegeben werden kann, um den Ständer beziehungsweise den magnetisierbaren Flussleitkörper zu drehen, um das Bewickeln mit einer weiteren Spule der Wicklung zu ermöglichen.

Weiterhin wird vorgeschlagen, dass im Bereich der Schräge ein beweglich, insbesondere schwenkbar, gelagertes Drahtführungselement angeordnet ist, welches ausgebildet ist, mittels einer Antriebseinheit zwischen einer Ruhestellung und eine Unterstützungsstellung bewegt, insbesondere verschwenkt, zu werden. Das Drahtführungselement kann vorzugsweise radial nach außen bewegt oder geschwenkt werden, sodass es das Ausbilden des Wicklungskopfs unterstützen kann. Zu diesem Zweck kann vorgesehen sein, dass das Drahtführungselement mittels der Antriebseinheit angetrieben werden kann. Beispielsweise kann vorgesehen sein, dass das Drahtführungselement bei jedem Anordnen eines Wicklungsdrahts auf der Schräge betätigt wird, um den Wicklungsdraht in die gewünschte Position für den Wicklungskopf zu bewegen beziehungsweise zu verformen. In der Ruhestellung kann vorgesehen sein, dass das Drahtführungselement im Wesentlichen nicht auf den Wicklungsdraht einwirkt. Dadurch kann zum Beispiel der Wickelprozess mittels der Drahteinlegevorrichtung unterstützt werden beziehungsweise es kann erreicht werden, dass dieser Prozess nicht gestört wird. Die Unterstützungsstellung ist dann vorzugsweise eine Stellung, insbesondere Schwenkstellung, bei der der Wicklungsdraht in die gewünschte Position bewegt wird. Dies ist besonders dann von Vorteil, wenn der Wicklungsdraht aufgrund seiner mechanischen Eigenschaften die gewünschte Position nicht selbsttätig einnimmt.

Darüber hinaus wird vorgeschlagen, dass die Wickelvorrichtung ein im Bereich eines auszubildenden Wicklungskopfes anordbares Formwerkzeug aufweist, welches mittels einer Werkzeugantriebseinheit axial parallel zur Längsachse bewegbar ist. Das Formwerkzeug ist zum Anordnen des Wicklungsdrahts auf der Schräge vorzugsweise axial entfernt vom Drahtleitkörper angeordnet. Dadurch kann das Anordnen des Wicklungsdrahts durch die Drahteinlegevorrichtung weitgehend ungestört erfolgen. Das Formwerkzeug weist vorzugsweise eine entsprechend des auszubildenden Wicklungskopfs angepasste Form auf. Durch Betätigen der mit dem Formwerkzeug mechanisch verbundenen Werkzeugantriebseinheit kann das Formwerkzeug axial parallel zur Längsachse bewegt werden, sodass es auf die den Wicklungskopf bildenden Wicklungsenden mechanisch einwirken kann. Dadurch können die Wicklungsenden zum Ausbilden des Wicklungskopfes verformt werden. Vorzugsweise erfolgt dies, wenn sämtliche Wicklungsenden bereits im Bereich der Körperstirnseite angeordnet sind. Es kann alternativ jedoch auch vorgesehen sein, dass bereits bei jedem Anordnen eines einzelnen Windungsendes das Formwerkzeug entsprechend betätigt wird.

Gemäß einer Weiterbildung wird vorgeschlagen, dass die Drahteinlegevorrichtung einen axial hin- und her bewegbaren Schlitten aufweist, an dem eine Drahtführungshülse angeordnet ist, die ausgebildet ist, mittels eines Schwenkantriebs zwischen zwei vorgebbaren Schwenkstellungen geschwenkt zu werden. Dadurch ist es auf einfache Weise möglich, mittels der Drahteinlegevorrichtung den Draht in vorgegebene Nuten, insbesondere vorgegebene Längsnuten eines Nutpaars, entsprechend einzuführen. Es kann vorgesehen sein, dass der Wicklungsdraht bei einer Hinbewegung in einer ersten Schwenkstellung in eine erste der Längsnuten eingeführt wird und nach Erreichen eines axialen Endes der Längsnut die Drahtführungshülse zu einer vorgegebenen zweiten der Längsnuten verschwenkt wird, und zwar in Umfangsrichtung um die Längsachse, sodass der Wicklungsdraht bei einer Rückbewegung des Schlittens in die weitere der Längsnuten eingelegt wird. Dieser Vorgang kann solange wiederholt werden, bis die gewünschte Anzahl an Windungen in dem Paar von Längsnuten angeordnet ist. Danach kann der magnetisierbare Flussleitkörper entsprechend verdreht werden, sodass ein weiteres Paar von Längsnuten entsprechend bewickelt werden kann.

Ein durch die erfindungsgemäße Wickelvorrichtung und/oder das erfindungsgemäße Verfahren hergestellte dynamoelektrische Maschine weist somit einen vergleichsweise axial kürzen Wickelkopf und einen höheren Wicklungsfüllgrad der Wicklung (z.B. Runddrahtwicklung) in den Nuten der dynamoelektrischen Maschine auf. Damit stellt sich eine gegenüber vergleichbaren dynamoelektrischen Maschinen höhere Effizienz ein, die vor allem als Antrieb für Verdichter, Pumpen, Kompressoren, Lüftern, Förderbänder etc., im industriellen Umfeld, in der Nahrungsmittelindustrie, im medizinischen Sektor und in Fahrzeugen - Straßen- oder Schienengebunden - zum Tragen kommt.

Die für das erfindungsgemäße Verfahren angegebenen Vorteile und Wirkungen gelten natürlich gleichermaßen auch für die erfindungsgemäße Wickelvorrichtung und umgekehrt. Insofern können Vorrichtungsmerkmale auch als Verfahrensmerkmale und umgekehrt formuliert sein.

Bei den im Folgenden erläuterten Ausführungsbeispielen handelt es sich um bevorzugte Ausführungsformen der Erfindung. Die vorhergehend in der Beschreibung angegebenen Merkmale, Merkmalskombinationen sowie auch die in der folgenden Beschreibung von Ausführungsbeispielen genannten und/oder in den Figuren alleine gezeigten Merkmale und Merkmalskombinationen sind nicht nur in der jeweils angegebenen Kombination, sondern auch in anderen Kombinationen verwendbar. Es sind somit auch Ausführungen von der Erfindung umfasst beziehungsweise als offenbart anzusehen, die in den Figuren nicht explizit gezeigt und erläutert sind, jedoch durch separierte Merkmalskombinationen aus den erläuterten Ausführungsformen hervorgehen und erzeugbar sind. Die anhand der Ausführungsbeispiele dargestellten Merkmale, Funktionen und/oder Wirkungen können für sich genommen jeweils einzelne, unabhängig voneinander zu betrachtende Merkmale, Funktionen und/oder Wirkungen der Erfindung darstellen, welche die Erfindung jeweils auch unabhängig voneinander weiterbilden. Daher sollen die Ausführungsbeispiele auch andere Kombinationen als die in den erläuterten Ausführungsformen umfassen. Darüber hinaus können die beschriebenen Ausführungsformen auch durch weitere der bereits beschriebenen Merkmale, Funktionen und/oder Wirkungen der Erfindung ergänzt sein.

In den Figuren bezeichnen gleiche Bezugszeichen gleiche Merkmale und Funktionen.

Es zeigen:
- FIG 1: eine schematisch perspektivische Ansicht einer ersten Ausgestaltung einer Wickelvorrichtung;
- FIG 2: eine schematisch perspektivische Ansicht eines Ausschnitts der ersten Ausgestaltung der Wickelvorrichtung gemäß FIG 1;
- FIG 3: eine schematisch perspektivische Ansicht wie FIG 2 einer zweiten Ausgestaltung einer Wickelvorrichtung; und
- FIG 4: eine schematisch perspektivische Ansicht einer dritten Ausgestaltung einer Wickelvorrichtung.

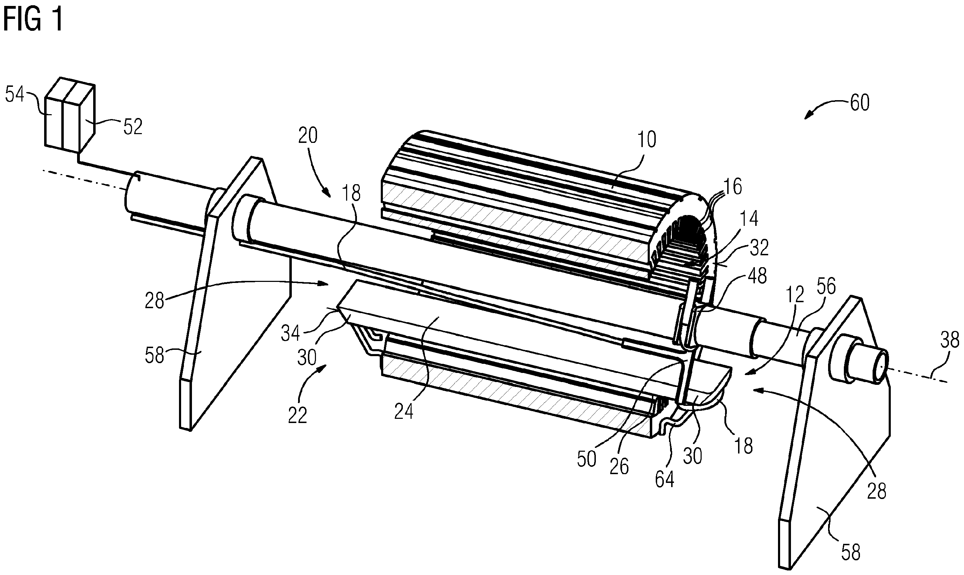

FIG 1 zeigt in einer schematisch-perspektivischen Ansicht eine Wickelvorrichtung 60, die dazu dient, eine Drahtwicklung 12 in einem Blechpaket 10 eines Ständers einer als Innenläufer ausgebildeten rotierenden elektrischen Maschine anzuordnen. Der Ständer sowie die weiteren Elemente der ausgebildeten rotierenden elektrischen Maschine sind in den FIG nicht dargestellt.

Das Blechpaket 10 dient vorliegend als magnetisierbarer Flussleitkörper. Das Blechpaket 10 weist vorliegend eine im Wesentlichen kreisrundförmige Aufnahmeöffnung 14 zum Aufnehmen des drehbar gelagerten Läufers der rotierenden elektrischen Maschine auf. Das Blechpaket 10 weist öffnungsseitig in Bezug auf die Aufnahmeöffnung 14 offene Längsnuten 16 zum Anordnen der Drahtwicklung 12 auf. Die Drahtwicklung 12 ist vorliegend durch Windungen aus einem Wicklungsdraht 18 gebildet. Die Aufnahmeöffnung 14 weist eine Längsachse 38 auf.

Das Blechpaket 10 weist axiale Körperenden auf, an denen Körperstirnseiten 32 ausgebildet sind. Die Längsnuten 16 sind an den Körperstirnseiten 32 offen ausgebildet, sodass der Wicklungsdraht 18 axial aus den Längsnuten 16 herausragen kann.

Die Wickelvorrichtung 60 weist eine in der Aufnahmeöffnung 14 anordbare Drahteinlegevorrichtung 20 auf. Die Drahteinlegevorrichtung 20 weist einen axial hin- und her bewegbaren Schlitten 48 auf. Zu diesem Zweck ist eine entsprechende Schlittenantriebseinheit 54 vorgesehen, die den Schlitten 48 mechanisch entsprechend antreibt.

An dem Schlitten 48 ist eine Drahtführungshülse 50 angeordnet, die ausgebildet ist, mittels eines Schwenkantriebs 52 zwischen zwei vorgebbaren Schwenkstellungen geschwenkt zu werden. Zu diesem Zweck ist der Schwenkantrieb 52 ebenfalls mit dem Schlitten 48 mechanisch verbunden. Die Werkzeugantriebseinheit 46 sowie der Schwenkantrieb 52 können zwar einstückig in einer gemeinsamen Baueinheit ausgebildet sein. Vorzugsweise sind sie jedoch als getrennte Baueinheiten ausgeführt. Mittels des Schwenkantriebs 52 werden die Schwenkstellungen jeweils an den axialen Endstellungen des hin und her bewegten Schlittens 48 gewechselt. Es ist vorliegend nicht vorgesehen, dass das Wechseln der Schwenkstellungen während der Hin- und Herbewegung des Schlittens 48 durchgeführt wird. Der Wicklungsdraht 18 ist vorliegend durch die Drahtführungshülse 50 durchgeführt, sodass mittels der Drahtführungshülse 50 das Anordnen des Wicklungsdrahts 18 bewirkt werden kann.

Der Schlitten 48 ist vorliegend an einer Halteachse 56 bewegbar gehalten. Die Halteachse 56 ist an gegenüberliegenden Enden von jeweiligen Halteeinheiten 58 koaxial zur Längsachse 38 gehalten. In alternativen Ausgestaltungen kann auch vorgesehen sein, dass lediglich eine einzige Halteeinheit 58 vorhanden ist, sodass das Blechpaket 10 auf einfache Weise mit der Wickelvorrichtung 60 verbunden werden kann, ohne dass eine Halteeinheit 58 montiert zu werden braucht. Eine Längsachse der Halteeinheit 58 ist vorliegend koaxial zur Längsachse 38 angeordnet. Die Halteachse 56 braucht jedoch nicht koaxial angeordnet zu sein. Sie kann auch lediglich parallel zur Längsachse angeordnet sein.

In den FIG nicht dargestellt ist eine Drahtbereitstellungsvorrichtung, die den Wicklungsdraht 18 in geeigneter Weise der Wickelvorrichtung 60 zuführt und bereitstellt. Der Wicklungsdraht 18 ist durch die Drahtführungshülse 50 hindurchgeführt und wird von dieser in geeigneter Weise, wie im Folgenden noch beschrieben wird, zum Anordnen in der jeweiligen Längsnut 16 bereitgestellt.

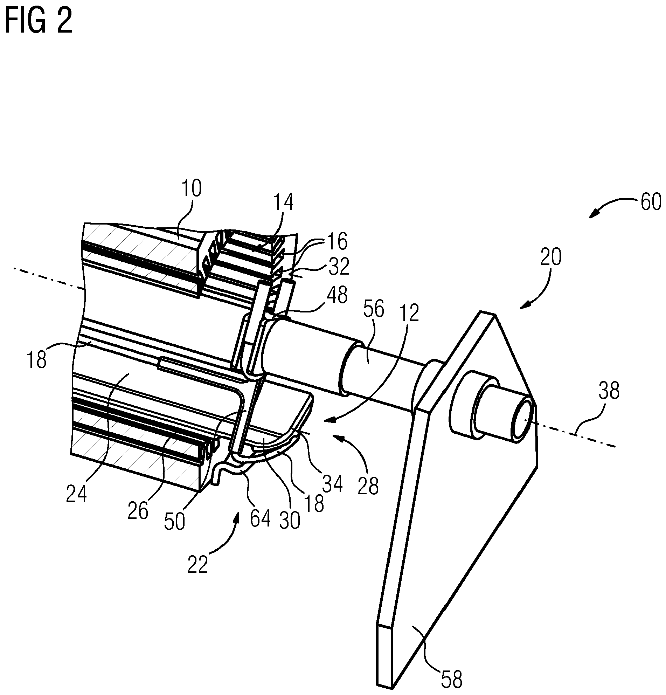

Wie die FIG 1 und 2 zeigen, weist die Wickelvorrichtung 60 ferner eine Unterstützungseinheit 22 auf, die das Einlegen des Wicklungsdrahts 18 unterstützt und die hierfür ein Führungselement aufweist, welches dazu ausgebildet ist, den Wicklungsdraht 18 in der vorbestimmten Längsnut 16 des Blechpakets 10 anzuordnen. Zu diesem Zweck weist die Unterstützungseinheit 22 in der vorliegenden Ausgestaltung einen in der Aufnahmeöffnung 14 an einem Rand der vorbestimmten Längsnut 16 anordbaren Drahtleitkörper 24 auf. Der Drahtleitkörper 24 stellt eine Schrägfläche 26 bereit, die als Führungselement dient. Die Schrägfläche 26 ist ausgebildet, einen durch die Drahteinlegevorrichtung 20 auf der Schrägfläche 26 angeordneten Wicklungsdraht 18 einer Windung der Wicklung 12 in die Längsnut 16 hineingleiten zu lassen. Zu diesem Zweck ist ein radial äußeres Ende der Schrägfläche 26 an einem Rand der entsprechenden Längsnut 16 ausgebildet. Die Schrägfläche 26 ist vorliegend in axialer Richtung entsprechend der Erstreckung des Blechpakets 10 ausgebildet. Dadurch wird über die gesamte axiale Länge der Längsnut 16 eine entsprechende Führungswirkung erreicht.

In der vorliegenden Ausgestaltung ist vorgesehen, dass der Drahtleitkörper 24 zwei gegenüberliegende Schrägflächen 26 aufweist, von denen lediglich eine der beiden Schrägflächen 26 in FIG 1 ersichtlich ist. Die zweite, gegenüberliegende Schrägfläche erstreckt sich ebenfalls in axialer Richtung wie die sichtbare Schrägfläche 26. Die nicht sichtbare Schrägfläche 26 ist ebenfalls gegenüber einer Längsnut 16 entsprechend angeordnet, sodass sie ein Hineingleiten des Wicklungsdrahts 18 in diese Längsnut 16 unterstützt beziehungsweise diese ermöglicht. Die beiden Schrägflächen 26 sind in Umfangsrichtung derart beabstandet, dass ein um den Drahtleitkörper 24 herumgewundener Wicklungsdraht 18 eine Windung der Drahtwicklung 12 ausbildet und mittels der gegenüberliegenden Schrägflächen 26 in jeweilige der Längsnuten 16 hineingleitet. Auf diese Weise kann eine entsprechende Spule in jeweiligen Längsnuten 16 ausgebildet werden.

Zu diesem Zweck wird die Drahteinlegevorrichtung 20 entsprechend betrieben, sodass auf den Drahtleitkörper 24 nacheinander die entsprechenden Windungen der Spule der Wicklung 12 angeordnet und in die entsprechenden Längsnuten 16 angeordnet werden. In der vorliegenden Ausgestaltung bilden diese zwei Längsnuten 16 ein Nutenpaar, welches zur Ausbildung einer entsprechenden Spule der Wicklung 12 dient. Die Längsnuten sind vorliegend um einen Winkel von etwa 50° in Umfangsrichtung voneinander beabstandet. Je nach Konstruktion der rotierenden elektrischen Maschine und der Wicklung 12 kann dies auch abweichend gewählt sein. Die zwischen dem Nutenpaar angeordneten Längsnuten 16 sind durch den Drahtleitkörper 24 verschlossen beziehungsweise verdeckt. Dadurch kann eine zuverlässige Wickelfunktionalität der Wickelvorrichtung 60 erreicht werden.

Aus FIG 1 und 2 ist ferner ersichtlich, dass der Drahtleitkörper 24 ausgebildet ist, im in der Aufnahmeöffnung 14 angeordneten Zustand zwei gegenüberliegende Endbereiche 28 auszubilden, die dem Ausbilden eines Wicklungskopfs dienen. In den Endbereichen 28 wird der Wicklungsdraht 18 von einer jeweiligen ersten Längsnut 16 zu einer jeweiligen zweiten Längsnut 16 im Bereich der Körperstirnseite 32 überführt. Hierdurch werden jeweilige nicht bezeichnete Wicklungsenden ausgebildet, die der späteren Ausbildung des jeweiligen Wicklungskopfs dienen.

Die Endbereiche 30 ragen über die Körperstirnseiten 32 aus der Aufnahmeöffnung 14 hinaus und bilden eine jeweilige radiale Schräge 34 aus, die mit einem Ende an der Körperstirnseite 32 anliegt. Die Schrägen 34 erstrecken sich somit vom Drahtleitkörper 24 radial nach außen. Durch die Schrägen 34 werden die Wicklungsenden des Wicklungsdrahts 18 radial nach außen geführt, sodass sie den Wicklungskopf ausbilden können und zugleich der Zugang zur Aufnahmeöffnung 14 frei bleibt. Hierzu weist der Drahtleitkörper 24 an seinen gegenüberliegenden axialen Enden jeweilige Endbereiche 30 auf.

Die Schrägen 34 sind vorliegend zumindest teilweise durch stiftartige Verlängerungen 64 ergänzt. Diese dienen dazu, das Anordnen des Wicklungsdrahts 18 in der jeweiligen Längsnut 16 zu unterstützen und zugleich den Wicklungsdraht 18 außerhalb des Blechpakets 10 radial nach außen zu bewegen. Zur Unterstützung kann vorgesehen sein, dass die Drahtführungshülse 50 ausgebildet ist, eine Zugkraft auf den Wicklungsdraht 18 auszuüben, sodass eine entsprechende Bewegung des Wicklungsdrahts 18 an der Schräge 34 unterstützt werden kann (FIG 2).

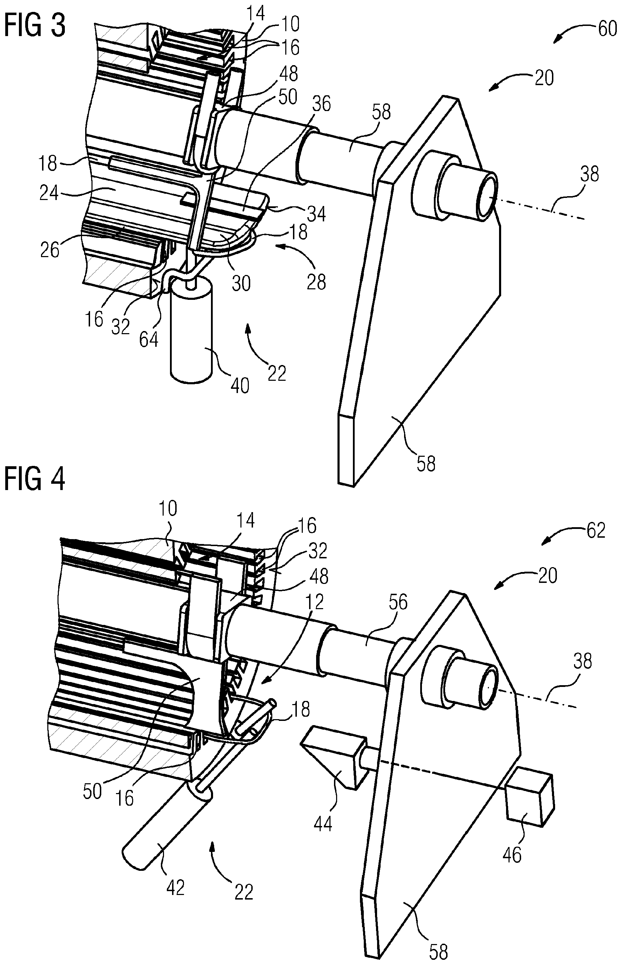

FIG 3 zeigt in einer schematisch perspektivischen Ansicht wie FIG 2 eine zweite Ausgestaltung der Wickelvorrichtung 60, die auf der ersten Ausgestaltung der FIG 1 und 2 basiert, weshalb ergänzend auf die diesbezüglichen Ausführungen verwiesen wird. Im Folgenden werden lediglich die Unterschiede erläutert.

Aus FIG 3 ist ersichtlich, dass der Drahtleitkörper 24 bei dieser Ausgestaltung im Bereich der Schräge 34 ein beweglich gelagertes Drahtführungselement 36 aufweist, welches ausgebildet ist, mittels einer Antriebseinheit 40 zwischen einer Ruhestellung und einer Unterstützungsstellung bewegt zu werden. In FIG 3 ist die Ruhestellung gezeigt, in der das Drahtführungselement 36 auf das Führen des Wicklungsdrahts 18 im Wesentlichen nicht einwirkt. Die Antriebseinheit 40 kann zum Beispiel als Hubmagnet ausgebildet sein. Es kann alternativ jedoch auch eine hydraulische oder pneumatische Steuerung oder ein Kugelgewindetrieb oder dergleichen vorgesehen sein.

Das Drahtführungselement 36 ist vorliegend radial nach unten bewegbar. Zu diesem Zweck wird es mittels der Antriebseinheit 40 entsprechend angetrieben, sodass die Unterstützungsstellung eingenommen werden kann. In der Unterstützungsstellung ist das Drahtführungselement 36 radial nach unten bewegt und kann so auf den Wicklungsdraht 18 im Bereich des Windungsendes einwirken und somit das Ausbilden des Wicklungskopfes unterstützen, wie zuvor bereits erläutert. Das Betätigen der Antriebseinheit 40 kann für jede einzelne Windung des Wicklungsdrahts 18 separat vorgesehen sein. Es kann aber auch vorgesehen sein, dass die Antriebseinheit 40 erst nach Anordnen einer vorgegebenen Anzahl von Windungen betätigt wird, damit die Windungsenden des Wicklungsdrahts 18 gemeinsam in die gewünschte Position bewegt werden können.

FIG 4 zeigt eine dritte Ausgestaltung für eine Wickelvorrichtung 62, die zum Teil auf den vorhergehenden Ausgestaltungen gemäß der FIG 1 bis 3 basiert, weshalb ergänzend auf die diesbezüglichen Ausführungen verwiesen wird. Wie aus FIG 4 ersichtlich ist, ist die Wickelvorrichtung 62 dazu vorgesehen, nicht nur einen einzigen Wicklungsdraht 18 in einem Schritt zu verarbeiten, sondern zugleich zwei oder mehr Wicklungsdrähte 18, die vorliegend parallel verarbeitet werden. Zu diesem Zweck ist die Drahtführungshülse 50 entsprechend ausgebildet, sodass sie zwei Wicklungsdrähte 18 gemeinsam zu führen vermag.

Im weiteren Unterschied zu den vorhergehenden Ausführungsbeispielen weist die Unterstützungseinheit 22 hier keinen Drahtleitkörper 24, sondern stattdessen an einer jeweiligen der Körperstirnseiten 32 jeweils zwei voneinander beabstandet angeordnete und gegenüber der Längsachse 38 geneigte Stifte 42 auf. Die Stifte sind vorliegend sowie auch im Allgemeinen mit einer Stiftantriebseinheit verbunden, die es erlaubt, die Stifte 42 nach Fertigstellung einer jeweiligen Spule aus den Wicklungsdrähten 18 zurückzuziehen. Dadurch kann erreicht werden, dass der Ständer beziehungsweise das Blechpaket 10 zum im Folgenden zu fertigenden Paar aus Längsnuten 16 gedreht werden kann.

Die Stifte 42 sind hinsichtlich ihrer Neigung und ihrer Position einstellbar ausgebildet, sodass auf einfache Weise eine Anpassung an unterschiedlichste Blechpakete 10 möglich ist. Die Stifte 42 dienen dazu, im Bereich der axialen Körperstirnseiten 32 das Führen der Wicklungsdrähte 18 von einer jeweiligen ersten Längsnut 16 zu einer jeweils davon beabstandet ausgebildeten zweiten Längsnut 16 zu ermöglichen. Zugleich kann durch die Schrägstellung gegenüber der Längsachse 38 erreicht werden, dass beim Anordnen der Wicklungsdrähte 18 aufgrund einer Zugkraft die Wicklungsdrähte 18 im Bereich der Stifte 42 radial nach außen bewegt werden, um später den Wicklungskopf auszubilden.

Die Drahtführungshülse 50 ist vorliegend so ausgebildet, dass die Wicklungsdrähte 18 unmittelbar von dieser in die Längsnuten 16 eingeführt werden können. Dazu ist die jeweilige Schwenkstellung der Drahtführungshülse 50 entsprechend genau gesteuert. Das Grundprinzip des Antriebs des Schlittens 48 sowie der Drahtführungshülse 50 entspricht dem, wie es bereits zuvor erläutert worden ist, weshalb auf die diesbezüglichen Ausführungen verwiesen wird.

In dieser Ausgestaltung ist ferner vorgesehen, dass die Wickelvorrichtung 62 ein im Bereich eines auszubildenden Wicklungskopfs anordbares Formwerkzeug 44 aufweist. Das Formwerkzeug 44 ist axial parallel zur Längsachse 38 bewegbar und mittels einer Werkzeugantriebseinheit 46 entsprechend angetrieben. Das Formwerkzeug 44 dient dazu, die Wicklungsdrähte 18 bei der Bewegung radial nach außen im Bereich der Körperstirnseiten 32 zu unterstützen. Dadurch kann auf einfache Weise die Ausbildung des Wicklungskopfs erreicht oder zumindest unterstützt werden. Auch hier kann natürlich vorgesehen sein, dass das Formwerkzeug 44 erst dann betätigt wird, wenn eine jeweilige Spule der Wicklung 12 fertiggewickelt ist. Es kann aber auch vorgesehen sein, dass das Formwerkzeug nach dem Herstellen einer jeweiligen Windung bereits betätigt wird.

In den FIG ist das Blechpaket 10 aufgeschnitten dargestellt. Für den Fachmann ist jedoch klar, dass das Blechpaket 10 in Umfangsrichtung geschlossen ausgebildet ist. Die aufgeschnittene Darstellung dient lediglich der Erläuterung der Erfindung.

Die Ausführungsbeispiele dienen ausschließlich der Erläuterung der Erfindung und sollen diese nicht beschränken.

## Patentansprüche

1. Wickelvorrichtung (60, 62) zum Anordnen einer Drahtwicklung (12) in einem magnetisierbaren Flussleitkörper (10) eines Ständers einer als Innenläufer ausgebildeten rotierenden elektrischen Maschine, wobei der magnetisierbare Flussleitkörper (10) eine Aufnahmeöffnung (14) zum Aufnehmen eines drehbar gelagerten Läufers der rotierenden elektrischen Maschine und öffnungsseitig offene Längsnuten (16) zum Anordnen der Drahtwicklung (12) aufweist, wobei die Drahtwicklung (12) Windungen aus wenigstens einem Wicklungsdraht (18) aufweist, mit:
- einer zumindest teilweise in der Aufnahmeöffnung (14) anordbaren Drahteinlegevorrichtung (20) und
- einer Unterstützungseinheit (22), die das Einlegen des Wicklungsdrahtes (18) unterstützt und die wenigstens ein Führungselement aufweist, welches dazu ausgebildet ist, den Wicklungsdraht (18) in einer vorbestimmten Längsnut (16) des magnetisierbaren Flussleitkörpers (10) anzuordnen.

2. Wickelvorrichtung nach Anspruch 1, **dadurch ge** - **kennzeichnet** , dass die Unterstützungseinheit (22) einen in der Aufnahmeöffnung (14) an einem Rand einer Längsnut (16) anordbaren Drahtleitkörper (24) aufweist, der eine Schrägfläche (26) als Führungselement bereitstellt, die ausgebildet ist, einen durch die Drahteinlegevorrichtung (20) auf der Schrägfläche (26) angeordneten Wicklungsdraht (18) einer Windung in die Längsnut (16) hineingleiten zu lassen.

3. Wickelvorrichtung nach Anspruch 2, **dadurch ge** - **kennzeichnet** , dass der Drahtleitkörper (24) zwei gegenüberliegende Schrägflächen (26) aufweist, die in Umfangsrichtung derart beabstandet sind, dass ein um den Drahtleitkörper (24) herumgewundener Wicklungsdraht (18) eine Windung der Drahtwicklung (12) ausbildet und mittels der gegenüberliegenden Schrägflächen (26) in jeweilige der Längsnuten (16) hineingleitet.

4. Wickelvorrichtung nach Anspruch 2 oder 3, **dadurch gekennzeichnet , dass** der Drahtleitkörper (24) ausgebildet ist, im in der Aufnahmeöffnung (14) angeordneten Zustand wenigstens einen Endbereich (28) zum Ausbilden eines Wicklungskopfs aufweist.

5. Wickelvorrichtung nach Anspruch 4, **dadurch ge** - **kennzeichnet**, dass der Drahtleitkörper (24) an seinen gegenüberliegenden axialen Enden jeweilige Endbereiche (30) aufweist, die über an axialen Körperenden des magnetisierbaren Flussleitkörpers (10) ausgebildete Körperstirnseiten (32) hinausragen und eine jeweilige radiale Schräge (34) ausbilden, die mit einem Ende an der Körperstirnseite (32) anliegt.

6. Wickelvorrichtung nach Anspruch 5, **dadurch ge** - **kennzeichnet** , dass im Bereich der Schräge (34) ein beweglich gelagertes Drahtführungselement (36) angeordnet ist, welches ausgebildet ist, mittels einer Antriebseinheit (40) zwischen einer Ruhestellung und einer Unterstützungsstellung bewegt zu werden.

7. Wickelvorrichtung nach einem der vorhergehenden Ansprüche, **dadurch gekennzeichnet , dass** die Unterstützungseinheit (22) an wenigstens einer der Körperstirnseiten (32) zwei voneinander beabstandet angeordnete und gegenüber der Längsachse (38) geneigte Stifte (42) aufweist, wobei die Stifte (42) ausgebildet sind, in Bezug auf den magnetisierbaren Flussleitkörper (10) von radial von außen nach innen zumindest in einen Bereich der Längsnuten (16) zu ragen, um ein Ausbilden eines Wicklungskopfs zu unterstützen, wobei die Stifte (42) vorzugsweise beweglich sind.

8. Wickelvorrichtung nach einem der vorhergehenden Ansprüche, **gekennzeichnet durch** ein im Bereich eines auszubildenden Wicklungskopfes anordbares Formwerkzeug (44), welches mittels einer Werkzeugantriebseinheit (46) axial parallel zur Längsachse (38) bewegbar ist.

9. Wickelvorrichtung nach einem der vorhergehenden Ansprüche, **dadurch gekennzeichnet, dass** die Drahteinlegevorrichtung (20) einen axial hin und her bewegbaren Schlitten (48) aufweist, an dem eine Drahtführungshülse (50) angeordnet ist, die ausgebildet ist, mittels eines Schwenkantriebs (52) zwischen zwei vorgebbaren Schwenkstellungen geschwenkt zu werden.

10. Verfahren zum Anordnen einer Drahtwicklung (12) in einem magnetisierbaren Flussleitkörper (10) eines Ständers einer als Innenläufer ausgebildeten rotierenden elektrischen Maschine, wobei der magnetisierbare Flussleitkörper (10) eine Aufnahmeöffnung (14) zum Aufnehmen eines drehbar gelagerten Läufers der rotierenden elektrischen Maschine und öffnungsseitig offene Längsnuten (16) zum Anordnen der Drahtwicklung (12) aufweist, wobei die Drahtwicklung (12) Windungen aus wenigstens einem Wicklungsdraht (18) aufweist, wobei:
- eine Drahteinlegevorrichtung (20) zumindest teilweise in der Aufnahmeöffnung (14) angeordnet wird und
- das Einlegen des Wicklungsdrahtes (18) mittels einer Unterstützungseinheit (22) unterstützt wird, die wenigstens ein Führungselement aufweist, wobei das Führungselement den Wicklungsdraht (18) in einer vorbestimmten Längsnut (16) des magnetisierbaren Flussleitkörpers (10) anordnet.

11. Dynamoelektrische Maschine hergestellt durch eine Wickelvorrichtung gemäß den Ansprüchen 1 bis 9 und/oder nach einem Verfahren gemäß Anspruch 10.

12. Verwendung einer dynamoelektrischen Maschine nach Anspruch 11 als Antrieb für Verdichter, Pumpen, Kompressoren, Lüftern etc., im industriellen Umfeld, in der Nahrungsmittelindustrie, im medizinischen Sektor etc.
